(19) Europäisches Patentamt
European Patent Office
Office européen des brevets

(11) Veröffentlichungsnummer: **0 287 089**
**A2**

(12) # EUROPÄISCHE PATENTANMELDUNG

(21) Anmeldenummer: **88105937.2**

(51) Int. Cl.[4]: **C09D 5/44**

(22) Anmeldetag: **14.04.88**

(30) Priorität: **15.04.87 DE 3712910**

(43) Veröffentlichungstag der Anmeldung:
**19.10.88 Patentblatt 88/42**

(84) Benannte Vertragsstaaten:
**AT BE DE ES FR GB IT SE**

(71) Anmelder: **Herberts Gesellschaft mit beschränkter Haftung**
**Christbusch 25**
**D-5600 Wuppertal 2(DE)**

(72) Erfinder: **Kann, Wolfgang, Dr.**
**Alt Bossel 1**
**D-4322 Sprockhövel 1(DE)**
Erfinder: **Goebel, Armin, Dipl.-Ing.**
**Osterroder-Strasse 27**
**D-5600 Wuppertal 2(DE)**
Erfinder: **Patzschke, Hans-Peter, Dr.**
**Am Heckendorn 71**
**D-5600 Wuppertal 2(DE)**

(74) Vertreter: **Türk, Gille, Hrabal**
**Bruckner Strasse 20**
**D-4000 Düsseldorf 13(DE)**

(54) **Verfahren zur Herstellung von an der Kathode abscheidbaren wässrigen Elektrotauchlacküberzugsmitteln.**

(57)

1. Wäßrige Elektrotauchlacküberzugsmittel werden bisher mit einem hohen Anteil an organischen Lösemitteln bereitet. Durch das neue Verfahren sollen wäßrige Elektrotauchlacküberzugsmittel mit einem niedrigen Gehalt an organischen Lösemitteln bereitgestellt werden, wobei die Lösemittel in ihrer Auswahl und Menge genau steuerbar sind.

2. Ein Elektrotauchlacküberzugsmittel wird hergestellt durch Bereiten eines Bindemittelsystems in einem mit Wasser nicht oder nur teilweise mischbaren organischen Lösemittel, Bereiten eines Vernetzersystems in einem mit Wasser nicht oder nur teilweise mischbaren Lösemittel, Vermischen der beiden erhaltenen Lösungen, Neutralisieren, Zusatz von Wasser unter Bildung einer Dispersion bzw. Emulsion, azeotropes Abdestillieren der nicht oder nur teilweise mit Wasser mischbaren organischen Lösemittel und gegebenenfalls Zusatz von wasserlöslichen und/oder wasserunlöslichen Lösemitteln, Pig-menten, Füllstoffen und/oder üblichen Lackhilfsmitteln.

3. Herstellung von an der Kathode abscheidbaren wäßrigen Elektrotauchlacküberzugsmitteln.

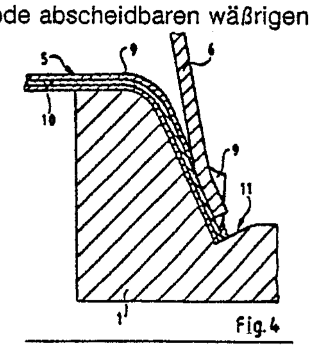


EP 0 287 089 A2

Xerox Copy Centre

## Verfahren zur Herstellung von an der Kathode abscheidbaren wäßrigen Elektrotauchlacküberzugsmitteln

Verfahren zur Herstellung von an der Kathode abscheidbaren wäßrigen Überzugsmitteln aus wasserverdünnbaren Basisharzen und Vernetzungsmitteln sind bekannt. Sie werden beispielsweise gemäß EP-A-12 463, DE-A-31 22 641, DE-A-34 36 345 und DE-A-26 03 666 in organischen, wasserlöslichen Lösemitteln hergestellt. Nach Mischen der einzelnen Harz-Lösungen werden die Aminogruppen ganz oder teilweise mit organischen Monocarbonsäuren neutralisiert und anschließend mit Wasser verdünnt. Ein genereller Nachteil dieses Verfahrens ist der relativ hohe Anteil an organischen Lösemitteln in den daraus hergestellten Überzugsmitteln. Er beträgt im allgemeinen 3 bis 10 Gew.-% bei einem Festkörpergehalt des Elektrophorese-Bades von 15 bis 20 Gew.-%, d.h. der Gehalt an organischen Lösemitteln bezogen auf den Festkörpergehalt kann bis zu 50 bis 60 Gew.-% betragen.

Der Erfindung leigt die Aufgabe zugrunde, wäßrige Dispersionen von Überzugsmitteln, insbesondere von an der Kathode abscheidbaren wäßrigen Elektrotauchlack-Überzugsmitteln mit einem niedrigen Gehalt an organischen Lösemitteln bereitzustellen, wobei die Lösemittel in ihrer Auswahl und Menge genau steuerbar sind und somit eine reproduzierbare Beckensteuerung ermöglicht wird.

Es wurde überraschenderweise gefunden, daß diese Aufgabenstellung gelöst werden kann, wenn man bei der Herstellung der wäßrigen Überzugsmittel so vorgeht, daß man eine Mischung aus basischem Basisharz und Vernetzer

1. in mit Wasser nicht oder nur teilweise mischbaren Harzlösemitteln herstellt,
2. die Harzlösung mit Säuren ganz oder teilweise neutralisiert,
3. durch Zusatz von Wasser eine Emulsion oder Dispersion herstellt,
4. aus der Emulsion oder Dispersion das wasserunlösliche organische Lösemittel azeotrop, bevorzugt vollständig bzw. nahezu vollständig abdestilliert und gegebenenfalls,
5. definierte Mengen wasserlöslicher und/oder wasserunlöslicher Lösemittel wieder zusetzt, wie sie z.B. für die Steuerung der elektrophoretischen Beschichtungen verwendet werden können.

Bei der Herstellung der Mischungen gemäß vorstehender Stufe 1 werden z.B. Lösungen von Bindemittel und Vernetzer in gleichen oder verschiedenen mit Wasser nicht oder nur teilweise mischbaren Harzlösemitteln bzw. organischen Lösemitteln miteinander vermischt. Bevorzugt handelt es sich dabei um die Lösungen, die bei der Herstellung der Bindemittel und/oder Vernetzer erhalten werden. Bei der Herstellung von Bindemittel und/oder Vernetzer werden daher bevorzugt solche Lösemittel verwendet, die zur Bereitung der erfindungsgemäß eingesetzten Mischungen geeignet sind.

Die Auswahl der Lösemittel wird im wesentlichen durch zwei Faktoren bestimmt, nämlich

-das Lösevermögen für das Harz und

-die Fähigkeit im Gemisch mit Wasser möglichst vollständig entfernt zu werden, z.B. als azeotropes Gemisch.

Eine Abschätzung des Lösevermögens erlauben die dreidimensionalen Löseparameter nach C.M. Hansen (J. Paint Techn. 42(1970), 660). Um eine gute Löslichkeit zu erhalten, sollte das Lösemittel(gemisch) etwa die gleichen Löslichkeitsparameter wie das Kunstharz enthalten. Für ein an der Kathode abscheidbares Basisharz sind beispielsweise folgende Parameter bevorzugt

Dispersionskräfte $\delta_D$ etwa 7.0 bis 8.5

Dipolwechselwirkungen: $\delta_P$ etwa 3 bis 5

Wasserstoffbrückenbindungen: $\delta_H$ etwa 2 bis 7

Beispiele für geeignete Lösemittel,sind somit solche, die

1. eine Molmasse von 70 bis 250 und einen Siedepunkt von 40 bis 270°C haben,
2. auf Grund ihrer Löslichkeitseigenschaften das hergestellte Harz (Bindemittel und/oder Vernetzer) ggf. in der Wärme homogen lösen,
3. aus Waser möglichst vollständig abdestillierbar sind, und insbesondere mit Wasser einen azeotropen Siedepunkt haben, wobei in jedem Falle der Siedepunkt unter dem des Wassers liegt und
4. mit Wasser in der Kälte möglichst wenig mischbar sind, bzw. mit Wasser zwei Phasen bilden.

Bevorzugt werden nichtwasserlösliche organische Lösemittel verwendet, die eine homogene Harzlösung (Bindemittel bzw. Vernetzer) mit einem Festkörper von 20 bis 60 Gew.-% bilden.

Besonders geeignet sind Lösemittel, mit einer Molmasse von 70 bis 170 und einem Siedepunkt von 80 bis 150°C. Das azeotrope Gemisch siedet zweckmäßig zwischen 55 und 100°C, besonders zwischen 70 und 98°C bei Normaldruck. Eine möglichst große Siedepunktserniedrigung wird erhalten, wenn der Siedepunkt des Lösemittels nahe 100°C liegt. Lösemittel, die im azeotropen Gemisch einen höheren Gehalt an Lösemittel als an Wasser enthalten, werden schneller aus dem Reaktionsgefäß entfernt und sind

daher besonders geeignet.

Beispiele für geeignete Lösemittel sind die verschiedenen Isomere folgender schwer wasserlöslicher Lösemittel:

1. Aliphatische Kohlenwasserstoffe mit einer Molmasse von 70 bis 170 und einem Siedepunkt von 35 bis 220°C wie beispielsweise Cyclohexan, n-Hexan, iso-Octan, n-Nonan, Dekan usw.

2. Aromatische Kohlenwasserstoffe mit einer Molmasse von 75 bis 120 und einem Siedepunkt von 80 bis 160°C wei beispielsweise Benzol, Toluol, Xylol, Ethylbenzol, Cumol usw.

3. Alkohole mit einer Molmasse von 85 bis 160 und einem Siedepunkt von 130 bis 220 wie beispielsweise iso-Butanol, n-Amylalkohol, iso-Amylalkohol, tert.-Amylalkohol, Hexanol-1, 2-Ethylhexanol, Cyclohexanol usw.

4. Ester mit einer Molmasse von 90 bis 150 und einem Siedepunkt von 75 bis 150°C wie beispielsweise n-Propylacetat, iso-Propylpropionat, tert.-Butylacetat, Pentylacetat, Hexylacetat, Cyclohexylacetat usw.

5. Ether mit einer Molasse von 74 bis 150 und einem Siedepunkt von 39 bis 150°C wie beispielsweise Methyl-n-propylether, Ethyl-n-propylether, Di-isopropylether, Methyl-isobutylether, Di-isobutylether, Di-n-butylether, Diethylenglykol-d-tert.-butylether usw.

6. Ketone mit einer Molmasse von 80 bis 150 und einem Siedepunkt von 80 bis 170 wie beispielsweise Methyl-n-propylketon, Methyl-iso-propylketon, Ethyl-iso-propylketon, Diisopropylketon, Methyl-iso-butylketon, Ethyl-n-butylketon, Di-iso-butylketon, Methyl-iso-amylketon, Cyclohexanon usw.

7. Halogenierte Kohlenwasserstoffe mit einer Molmasse von 115 bis 170 und einem Siedepunkt von 60 bis 150°C wie beispielsweise Chloroform, Tetrachlorkohlenstoff, Dichlorethan, Trichlorethan, Trichlorethylen, Tetrachlorethan, Tetrachlorethylen, Chlorbenzol usw.

Die Lösemittel können grundsätzlich einzeln oder aus Löslichkeitsgründen im Gemisch verwendet werden. So werden aliphatische Kohlenwasserstoffe im allgemeinen nur als Ver schnittmittel zugesetzt, weil sie für die Harze (Bindemittel und Vernetzer) keine ausreichenden Löslichkeitseigenschaften mitbringen.

Um die abdestillierten Lösemittel wieder ohne Probleme einsetzen zu können, wird die Verwendung nur eines Lösemittels für Basisharz und Vernetzungsmittel bevorzugt.

Bei der Auflösung oder der Herstellung von Bindemittel und Vernetzer können im allgemeinen wasserstoffreaktive Lösemittel wie Alkohole nicht eingesetzt werden, weil sie zu unerwünschten Nebenreaktionen führen. Beim Einsatz von Estern ist zu beachten, daß sie mit Aminen umamidieren und mit Wasser verseifen können. Auf diese Weise gehen basische Aminogruppen des Basisharzes verloren, die für die Wasserlöslichkeit wichtig sind oder es reichern sich in dem Bindemittel Säuren an, die zu einer Störung der elektrischen Eigenschaften und damit verbunden zu schlechten Oberflächenqualitäten führen.

Bevorzugte Lösemittel sind Ether wie Di-n-butylether, Ketone wie Methyl-iso-butylketon, insbesondere aromatische Kohlenwasserstoffe wie Xylol.

Es genügt, wenn die Basisharze bzw. die Vernetzer in den Lösemitteln nur in der Hitze löslich sind. So sind z.B. die Basisharze in aromatischen Kohlenwasserstoffen meist nur in der Hitze gelöst, beim Abkühlen erstarren sie.

Das basische Bindemittel wird in der Lösung im organischen Lösemittel bevorzugt nach dem Vermischen mit der Lösung des Vernetzers vollständig oder teilweise mit Säuren neutralisiert. Typische Beispiele für Säuren sind Ameisensäure, Milchsäure, Essigsäure, Propionsäure, Zitronensäure, Malonsäure, Acrylsäure, Phosphorsäure oder Alkylphosphorsäure. Monobasische niedrigmolekulare organische Carbonsäuren werden bevorzugt.

Die Neutralisation erfolgt, um eine Dispergierbarkeit der Basisharze zu erzielen. Es wird daher soviel Säure zugegeben, daß eine stabile Emulsion aus dem Basisharz in Anwesenheit des Vernetzers entsteht.

Ein Säureüberschuß, d.h. ein Neutralsisationsgrad von über 100 %, ist zweckmäßig zu vermeiden. Es wird ein MEQ-Wert (Milliäquivalente Säure pro 100 g Festharz) von 15 bis 50 bevorzugt. Der MEQ-Wert soll möglichst niedrig sein, um bei der späteren Abscheidung des Überzugsmittels ein möglichst hohes Abscheideäquivalent zu erreichen.

Die Neutralisation erfolgt insbesondere nach dem Vermischen der Lösungen von Basisharz und Vernetzer.

Aus der neutralisierten Mischung der Lösungen von Basisharz und Vernetzer wird anschließend unter langsamen allmählichen Zusatz von vollentsalztem Wasser eine Dispersion mit einem Festkörper von 15 bis 60 Gew.-% hergestellt. Innerhalb der vorstehenden Werte für MEQ und Festkörpergehalt wählt man ein gut destillierbares System. Die obere Grenze des MEQ-Werts wird so gewählt, daß die Dispersion nicht zu dick wird. Die untere Grenze so, daß beim weiteren Verdünnen mit Wasser keine Löseschwierigkeiten auftreten. Der obere Wert des Festkörpergehalts wird so gewählt, daß ebenfalls keine zu dicke Dispersion entsteht, da sonst die Gefahr des Anbrennens an den beheizten Wandungen auftritt. Die untere Grenze wird

so gewählt, daß eine zu starke Schaumneigung bei der Destillation verhindert wird. Es hat sich gezeigt, daß bevorzugte Bereiche für den MEQ-Wert bei 20 bis 30 liegen; bevorzugte Werte für den Festkörpergehalt liegen bei 25 bis 40 Gew.-%.

Die Mengenverhältnisse zwischen organischem Lösemittel und Wasser werden zweckmäßig so gewählt, daß das organische Lösemittel möglichst vollständig entfernt werden kann, bzw, daß sich ein azeotropes Gemisch bilden kann. Bei der durchzuführenden Destillation geht zunächst ein Gemisch mit konstanter Zusammensetzung, die dem des Azeotrop-Minimums entspricht, über, weil es den niedrigsten Siedepunkt hat. Ist reichlich Wasser vorhanden, bzw. ist gegenüber der Zusammen setzung des Azeotrops im Lösemittel-Wassergemisch Wasser im Überschuß vorhanden, so wird das organische Lösemittel aus dem Ansatz herausgeschafft.Zweckmäßig wird die Destillation im Kreislaufsystem durchgeführt, d.h. es wird dafür gesorgt, daß das abdestillierte Wasser nach der Trennung vom organischen Lösemittel laufend in das Reaktionsgefäß zurückfließt. Liegt das spezifische Gewicht des Lösemittels unter 1; so wird das Wasser aus der unteren Phase zurückgeführt, liegt es jedoch über 1, so läuft das Wasser von oben in den Kreislauf zurück. Es wird solange destilliert bis kein organisches Lösemittel mehr abgeschieden wird.

Besteht die Gefahr einer Verseifung, bzw. einer unerwünschten Reaktion zwischen Basisharz und Vernetzungsmittel, so kann der Vorgang auch unter Vakuum bei niedrigeren Temperaturen wie biespielsweise bei 40°C durchgeführt werden. Es ist hierbei darauf zu achten, daß sich durch eine unterschiedliche Druckabhängigkeit der Partialdampfdrucke die Voraussetzungen für die Bildung eines azeotropen Gemisches verändern können.

Die Kreislaufdestillation kann auch in Form einer Wasserdampfdestillation durchgeführt werden. Der Trägerdampf sorgt für eine besonders starke Durchmischung des zu destillierenden Materials und treibt damit die letzten Lösemittelreste besonders gut aus dem Reaktionsgut. Er verhindert oft lästiges Schäumen und wirkt gleichzeitig als Schutzgas.

Bevorzugt wird das mit Wasser nicht bzw. nur teilweise mischbare organische Mittel bei der azeotropen Destillation vollständig oder zumindest nahezu vollständig abdestilliert. Es ergibt sich dann die Möglichkeit, einen gewünschten Lösemittelgehalt nachträglich durch Zusatz bestimmter ausgewählter Lösmittel bzw. Lösemittelmengen einzustellen.

Als basische Basisbindemittel werden z.B. die auf diesem technischen Gebiet bekannten bzw. üblichen primäre, sekundäre und tertiäre Aminogruppen enthaltenden Amin-Epoxidharze mit einer Aminzahl von 30 bis 150 (mg KOH pro g Festharz) oder 0.5 bis 2.7 Milliäquivalenten kationischer Gruppen pro g. Festharz und einer Hydroxylzahl von 50 bis 500 oder 0.9 bis 8.9 Milliäquivalenten Hydroxylguppen pro g Festharz verwendet. Amino-Epoxidharze, die nur tert.-Aminogruppen enthalten, werden bevorzugt. Die obere Grenze der Aminzahl beträgt bevorzugt 120, besonders bevorzugt 100, die untere Aminzahl liegt bevorzugt bei 45, besonders bevorzugt bei 70. Ist die Aminzahl zu niedrig, so ist die Löslichkeit zu gering oder es entstehen durch einen zu hohen Neutralisationsgrad zu saure pH-Werte in den Elektrophoresebädern. Ist die Aminzahl zu hoch, so haftet der abgeschiedene Film schlecht oder es entsteht eine unruhige Oberfläche mit unterschiedlichen Schichtstärken. Für die beim Einbrennen ablaufenden Vernetzungsreaktionen sind die im Molekül vorhandenen Hydroxylgruppen wesentlich. Ihre Zahl beträgt mindestens 2, bevorzugt mindestens 4 Hydroxylgruppen pro Molekül. Es wird eine obere Grenze der Hydroxylzahl von 400 bevorzugt, bzw. von 300 besonders bevorzugt. Die untere Grenze der Hydroxylzahl liegt bevorzugt bei 100, besonders bevorzugt bei 150. Ist die Hydroxylzahl zu niedrig, so entstehen bei der Vernetzung Filme, die noch in organischen Lösemitteln wie Aceton oder Methyl-ethylketon löslich sind. Ist die Hydroxylzxahl dagegen zu hoch, so wird der Film zu spröde und bleibt eventuell auch zu hydrophil.

Der chemische Aufbau des Aminoepoxidharzes und seine Eigenschaften können in weitem Umfang variiert werden, beispielsweise durch

-die Auswahl der Epoxidharze und der Amine,
-die Anzahl der Amino-und Hydroxylgruppen,
-die Molmasse und das Molverhältnis von Basisharz und Vernetzer,
-das Verhältnis von harten und weichen Molekülsegmenten.

Epoxidgruppenhaltige Harze mit vorzugsweise endständigen 1,2-Epoxidgruppen sind Polyglycidylether, Polyglycidylamine oder epoxidgruppenhaltige Poly-Kohlenwasserstoffe, mit einer mittleren Molmasse von 140 - 4000 und einem Epoxidäquivalentgewicht von etwa 70 bis 2600. Es können 1,5 bis 8, bevorzugt 1,8 bis 3 Epoxidgruppen pro Molekül vorhanden sein. Geeignete Polyepoxidharze sind beispielsweise Verbindungen der allgemeinen Formel

(2) 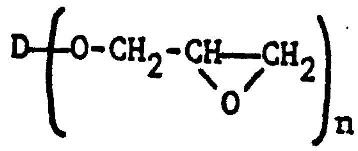

in welcher

D für den Rest eines mehrwertigen, bevorzugt zweiwertigen Alkohols, Phenols, Amins oder entsprechender heterocyclischer Verbindungen und

n für eine Zahl von 2 bis 6, vorzugsweise 2, steht, und die auch als Gemische eingesetzt werden können.

Besonders bevorzugt werden verwendet Polyglycidylether, die etwa zwei 1.2-Epoxidgruppen pro Molekül enthalten, mit einer mittleren Molmasse von etwa 300 bis 1500 und einem Epoxidäquivalentgewicht von etwa 170 bis 1000 besonders 180 bis 500.

Sie werden beispielsweise hergestellt durch Reaktion von Epihalogenhydrinen bzw. Methylepihalogenhydrinen, bevorzugt Epichlorhydrin mit zweiwertigen Phenolen, wobei durch Auswahl der Molverhältnisse und Zusatz geeigneter basischer Katalysatoren, wie Ammonium-oder Phosphoniumsalzen die Molmasse eingestellt werden kann. Unter die Formel (2) fallen z.B. Harze der folgenden Formel:

(3) 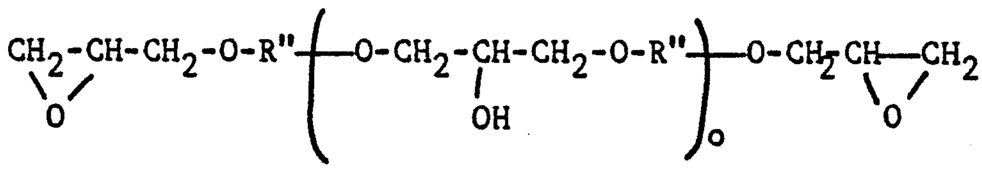

wobei o = 0 bis 2 und R″ bevorzugt der Rest eines Bisphenols folgender Struktur ist:

(4) 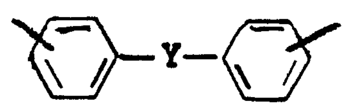 = R″

wobei Y = $-CH_2-$, $-C(CH_3)_2-$, -CO-, -S-, -SO-, $-SO_2-$, $-C(CCl_3)_2-$ist. Die Aromatenringe können gegebenenfalls durch Halogene oder Alkylgruppen substituiert sein.

Typische zweiwertige Phenole sind Hydrochinon, Resorcin, 1.5-Dihydroxynaphthalin, p.p′-Dihydroxydiphenylpropan, p.p′-Dihydroxybenzophenon, p.p′-Dihydroxydiphenylmethan, p.p′-Dihydroxydiphenylethan, p.p′-Dihydroxydi-tertiärbutylphenylpropan oder Bis(2-hydroxynaphthyl)methan.

Bevorzugt werden die technischen Mischungen, wie von Dihydroxydiphenylpropanen, besonders die 4.4′-Isomeren mit geringen Anteilen an 2.2′ oder 4.2′-Isomeren. Die beschriebenen Epoxidharze können auch vollständig oder teilweise hydriert sein, wie beispielsweise 1.4′-Bis(-2.3′-epoxypropoxy)cyclohexan oder in Gemischen mit unterschiedlicher Struktur und Molmasse eingesetzt werden. Sie können jedoch auch durch Reaktionen mit Polyalkoholen, bevorzugt langkettigen Diolen, wie Butandiol-1.4 oder Hexandiol-1.6 in Gegenwart von geeigneten Katalysatoren, wie z.B. $BF_3$-Komplexe modifiziert sein.

Ebenfalls geeignet sind Polyglycidylether von mehrwertigen Alkoholen, die durch folgende allgemeine Formel gekennzeichnet sind, die von der vorstehenden allgemeinen Formel (2) umfaßt werden:

(5) 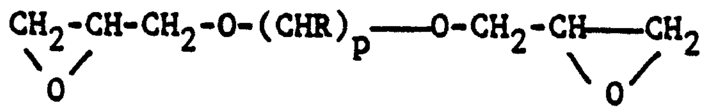

wobei R = Wasserstoff oder ein niedriger, gegebenenfalls mit verschiedenen Substituenten versehener Alkylrest, bevorzugt $-CH_3$ oder $-C_2H_5$ und p = 2 bis 15 ist. Typische Beispiele hierfür sind die Reaktionsprodukte von Epichlorhydrin und Ethylenglykol, 1.2-und 1.3-Propylenglykol, 1.2-und 1.4-Butandiol, 1.5-Pentadiol, 2-Ethyl-hexandiol-1.6, aber auch Verbindungen wie 1.2.6-Hexantriol oder Bis-(4-hydroxycyclohexyl)-2.2-propan. Geeignete Polyglycidylether können aber auch der Formel

(6) 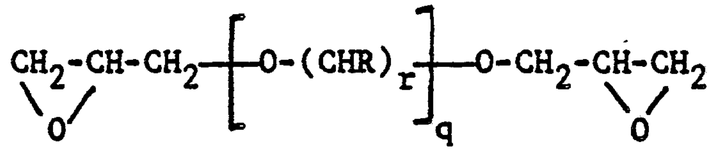

entsprechen, die ebenfalls unter die allgemeine Formel (2) fällt, wobei R dieselbe Bedeutung wie oben hat und r = 2 bis 6 und q = 1 bis 20 bedeuten. Typische Beispiele hierfür sind die Reaktionsprodukte von Epichlorhydrin und den aus Ethylenglykol, 1.2-Propylenglykol oder 1.2-Butylenglykol erhaltenen Polyethern, wie Polyethylenglykole, Polypropylenglykole oder Polybutylenglykole mit verschiedenen Molmassen.

Unter die Formel (2) fallen durch heterocyclische Polyepoxidverbindungen, die ebenfalls verwendet werden können, wie 1.3-Diglycidyl-5.5-dimethylhydantoin oder Triglycidylisocyanurat. Eine andere geeignete Klasse von Polyepoxiden sind Polyglycidylether von phenolischen Novolakharzen. Sie werden durch Einwirken von Formaldehyd auf Phenole im molaren Verhältnis von 1:0,5 bis 0,8 unter sauren Bedingungen kondensiert und anschließend mit Epichlorhydrin umgesetzt. Sie haben ein Epoxid-Äquivalentgewicht von 150 bis 300, bevorzugt 170 bis 210 und enthalten etwa 2 bis 4 Glycidyl-gruppen pro Molekül. Bei diesem Harzsystem ist zu berücksichtigen, daß es im allgemeinen eine höhere durchschnittliche Molmasse hat, bei spielsweise zwischen 474 und 3 000. Als Polyepoxide können auch Polyglycidylether von Polyaminen wie N.N-Diglycidylanilin oder N.N.N'.N'-Tetraglycidyl-4.4'-diaminodiphenylmethan oder epoxidierte Aminomethyldiphenyloxide verwendet werden.Für das erfindungsgemäße Verfahren werden Polyglycidylether bevorzugt, die keine zusätzlichen Aminogruppen enthalten.

Als Epoxidharze werden auch estergruppenfreie, epoxidgruppenhaltige aliphatische oder cycloaliphatische Kohlenwasserstoffe verstanden, die durch Epoxidierung mit Persäuren hergestellt werden. Beispiele hierfür sind epoxidierte Polybutadienöle, Vinylcyclohexendioxid oder Bis-(2.3-epoxycyclopentyl)ether.

Aminogruppen werden zweckmäßig durch Addition von NH-reaktiven Verbindungen an die Epoxidgruppen eingeführt. Die Umsetzung geschieht daher ungefähr im Äquivalenzverhältnis, gegebenenfalls mit einem kleinen Überschuß an Epoxidgruppen, um den Verbrauch für Nebenreaktionen zu kompensieren, bzw. einen vollständigen Einbau der Amine zu gewährleisten. Primäre Amine reagieren mit zwei Epoxidgruppen und führen dadurch zu einer Kettenverlängerung. Die Reaktion der Amine beginnt schon bei Raumtemperatur und ist im allgemeinen exotherm. Durch Erhöhen der Reaktionstemperatur auf etwa 50 bis 150°C, bevorzugt 60 bis 85°C, ist aus Stabilitätsgründen sicherzustellen, daß nach Reaktionsende keine Epoxidgruppen mehr vorhanden sind. Es können alle Amine im Gemisch gleichzeitig mit den Epoxidgruppen umgesetzt oder es kann stufenweise vorgegangen werden, d.h. ein oder mehrere basische epoxidgruppenhaltige Zwischenprodukte können in verschiedener Reihenfolge hergestellt werden.

Für die Umsetzung mit den Epoxidharzen werden zweckmäßig Amine aus folgenden Gruppen ausgewählt:

1. Mono-oder Di-hydroxalkylamine der allgemeinen Formel

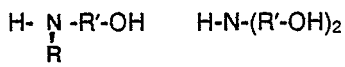

wobei

-R = -H oder ein Alkylrest mit 1 bis 8 C Atomen, bevorzugt Methyl oder Ethyl und

-R' -ein Alkylen-Rest mit 2 bis 8 C-Atomen, bevorzugt Ethylen oder Propylen ist.

Amine dieses Typs verbessern durch ihre bevorzugt primären Hydroxylgruppen die Reaktivität des Basisharzes. Typische Beispiele hierfür sind Aminoethanol, N-Methyl-aminoethanol, N-Ethyl-aminoethanol, Di-ethanolamin, Aminoisopropanol, N-Methyl-aminoisopropanol, N-Methyl-amino-n-propanol, N-Ethyl-aminoisopropanol, Di-isopropanolamin usw.

2. N,N-Dialkyl-aminoalkylamine der allgemeinen Formel

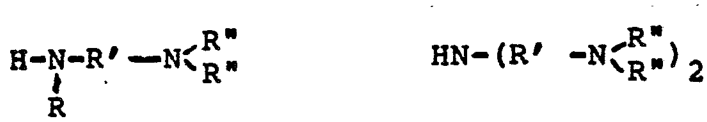

wobei

-R = H oder -R",

-R' -ein Alkylenrest mit 2 bis 8 C-Atomen, bevorzugt Ethylen oder Propylen und

-R" ein Alkylrest mit 1 bis 8 C Atomen, bevorzugt Methyl oder Ethyl bedeuten.

Amine dieses Typs verbessern durch die Dialkylamino-Gruppen die Basizität und damit die Löslichkeit des Basisharzes. Geeignete Beispiele hierfür sind N-Dimethylaminoethylamin, N-Diethyl-N'-methyl-aminopropylamin, Diethylaminoethylamin, Dimethylaminopropylamin, Diethylaminopropylamin, Dimethylaminoneopentylamin usw.

3. Langkettige sekundäre Diamine, die unter Kettenverlängerung zur Elastifizierung verwendet werden, der allgemeinen Formel

$$H-\underset{R}{\underset{|}{N}}-R'-\underset{R}{\underset{|}{N}}-H$$

wobei

-R eine Alkylgruppe oder Hydroxalkylgruppe mit 1 bis 18 C-Atomen und

-R' eine Alkylengruppe oder Alkylenoxygruppe mit 2 bis 12 C-Atomen, bevorzugt 4 bis 8 C-Atomen bedeuten.

Das sekundäre Diamin kann auch durch Reaktion des entsprechenden primären Alkylendiamins mit Glycidylethern oder Glycidylestern hergestellt werden. Typische Beispiele sind N,N'-Dialkyl-diaminoalkane wie N,N'-Dimethyl-diamino-hexan oder bevorzugt das Reaktionsprodukt aus Hexandiamin mit 2 Mol Cardura E, dem Glycidylester der Versaticsäure. Eine Verlängerung der elastifizierenden Kette kann man unter Bildung von Harnstoffgruppen durch Umsatz von 2 Molekülen der oben beschriebenen sekundären Diamine mit 1 Mol Diisocyanat erhalten. Das sekundäre Diamin kann auch asymmetrisch aufgebaut sein, wenn die beiden Substituenten ungleich sind. Beispielsweise kann das Diamin ein Reaktionsprodukt von N-Hydroxethyl-Ethylendiamin oder N-Dimethylaminoethyl-propylendiamin mit Cardura E sein.

Zur weiteren Modifizierung der Epoxidharze können auch primäre Monalkylamine und/oder bevorzugt sekundäre Dialkylamine wie Diethylamin, n-Octylamin, N-Methyl-N-ethylhexylamin, Didodecylamin oder Methoxypropylamin verwendet werden.

Werden Aminoepoxidharze mit Diisocyanaten oder isocyanatgruppenhaltigen Präpolymeren verknüpft, so entsteht eine Molekülvergrößerung unter Urethangruppenbildung. Setzt man OH-gruppenhaltige Epoxidharze vor der Reaktion mit Aminen um, so tritt eine Erhöhung der Epoxidharz Funktionalität auf, die bei der weiteren Umsetzung beachtet werden muß, um Gelierungen zu vermeiden.

Die organischen Polyisocyanate weisen eine mittlere Molmasse von 112 bis 5.000, bevorzugt 140 bis 1.000, und zweckmäßig eine mittlere Isocyanatfunktionalität von 2 bis 8 auf. Geeignete Polyisocyanate sind beispielsweise Verbindungen der idealisierten Formel

(7) $E(N=C=O)_s$

in welcher

E für einen aromatischen, gegebenenfalls mit einem oder mehreren Alkylgruppen substituierten oder Methylenbrücken aufweisenden Kohlenwasserstoffrest mit insgesamt 6 bis 15 Kohlenstoffatomen, einen aliphatischen Kohlenwasserstoffrest mit 2 bis 18, vorzugsweise 6 bis 10 Kohlenstoffatomen, einen cyclischen Kohlenwasserstoffrest mit 6 bis 15 Kohlenstoffatomen oder einen heterocyclischen Ring und

s für eine Zahl von 2 bis 4, vorzugsweise 2 bis 3, steht.

Typische Beispiele für derartige Polyisocyanate sind Propylendiisocyanat, Ethylethylendiisocyanat, Dimethylethylendiisocyanat, Trimethylendiisocyanat, Tetramethylendiisocyanat, Pentamethylendiisocyanat, Hexamethylendiisocyanat, Trimethylhexandiisocyanat, 1.12-Dodecandiisocyanat, 1.18-Octadecan-diisocyanat, Cyclopentandiisocyanat, Cyclohexan-1.3-und -1.4-diisocyanat, sowie beliebige Gemische dieser Isomeren, Methylcyclohexandiisocyanat,m-oder p-Tetramethylxyloldiisocyanat, 1-Isocyanato-3.3.5-trimethyl-5-isocyanatomethyl-cyclohexan, Perhydro-2.4'-und/oder -4.4'-diphenylmethandiisocyanat, 1.3-und 1.4-Phenylendiisocyanat, 2.4 und 2.6-Toluylendiisocyanat sowie beliebige Gemische dieser Isomeren, Xylylendiisocyanat, Diphenylmethan-2.4'-und/oder -4.4'-Diisocyanat, 3.2'-und/oder 3.4'-Diisocyanato-4-methyldiphenylmethan, Bisphenylendiisocyanat, Naphthylen-1.5-diisocyanat, Triphenylmethan-4.4'.4"-triisocyanat, 2.2'.4.4'-Tetraisocyanato-5.5'-dimethyltriphenylmethan, Diphenyltetraisocyanat oder Naphthyltetraisocyanat. Gemischt aliphatische/aromatische Verbindungen sind auch geeignet. Besonders bevorzugt werden großtechnisch erzeugte Diisocyanate wie Toluylendiisocyanat, Hexandiisocyanat, Isophorondiisocyanat oder Dicyclohexylmethan-diisocyanat.

Außer den beispielhaft genannten, niedermolekularen Polyisocyanaten können auch die in der Polyurethanchemie bekannten höhermolekularen Isocyanat-Polymere auf Basis urethangruppenfreier Polyisocyanate und höhermolekularer Polyhydroxyverbindungen als Polyisocyanatkomponente eingesetzt werden. Zweckmäßig werden hierbei (n + 1) Mol der oben beschriebenen Diisocyanate mit n Mol einer gegenüber

Isocyanat reaktiven difunktionellen Verbindung bei Temperaturen von zweckmäßig 50 bis 120°C in der Schmelze oder in Gegenwart inerter Lösemittel umgesetzt, die sowohl niedrigmolekular als auch hochmolekular mit einer Molmasse von 62 bis 5.000, bevorzugt 90 bis 1.000, sein können. Arbeitet man mit einem Überschuß an Diisocyanat, so muß das überschüssige Isocyanat wieder abdestilliert werden. Als niedermolekulare Dialkohole werden zweckmäßig die verschiedenen Isomere von linearen, verzweigten und cyclischen Kohlenstoffverbindungen mit 2 bis 20 Kohlenstoffatomen und zwei sekundären und/oder primären Hydroxylgruppen verstanden. Typische Beispiele hierfür sind Butandiol-1.4, Hexandiol-1.6, Trimethylhexandiol, Bis(hydroxymethyl)cyclohexan, Neopentylglykol, Hydroxypivalinsäureneopentylglykolester ,N-Methyldiethanolamin oder Bis-ethoxyliertes Bisphenol A. Geeignete höhermolekulare Polyhydroxylverbindungen sind die aus der Polyurethanchemie bekannten Polyesterdiole, Polycaprolactondiole, Polycaprolactamdiole, Polyglykoletherdiole. Verwendet werden können auch langkettige primäre und sekundäre Diamine, wie Hexan-diamin-1.6, Addukte von 2 Mol Glycidylether oder Glycidylester an Hexandiamin, N,N'-Cyanethylethylendiamin oder Bis-N.N'-Cyanethylpolyoxypropylendiamin.

Für die erfindungsgemäße Umsetzung werden bevorzugt Diisocyanate eingesetzt. Es können jedoch auch höherwertige Polyisocyanate, wie sie später bei der Beschreibung des Vernetzers eingesetzt werden, verwendet werden, wenn sie durch geeignete monofunktionelle Verbindungen zu einem Diisocyanat defunktionalisiert werden. Hierzu dienen Monoalkohole oder Monoamine verschiedener Kettenlänge, wei beispielsweise n-Butanol, Isodecanol oder Di(ethylhexyl)amin oder auch die als Verkappungsmittel später beschriebenen Verbindungen. Je nach Art der Gruppe und der Einbrennbedingungen bleiben die eingeführten organischen Reste als Elastifizierungsmittel erhalten oder führen durch Abspalten der Schutzgruppe zu einem selbstvernetzenden Bindemittel.

Die vorstehend beschriebenen fremdvernetzenden, aminogruppenhaltigen Kunstharz-Bindemittel (A) werden zusammen mit Vernetzungsmittel eingesetzt, die nachfolgend als Komponente (B) bezeichnet werden. Gemäß dem Stand der Technik werden dabei auf 50 bis 95 Gew.-% Kunstharz-Bindemittel (A) 50 bis 5 Gew.-% Vernetzungsmittel bezogen auf Festharz eingesetzt. Das bevorzugte Mischungsverhältnis der Komponenten (A) und (B) liegt zwischen 90 zu 10 und 60 zu 40 und wird empirisch aus den optimal erreichbaren anwendungstechnischen Eigenschaften bei der gegebenen Einbrenntemperatur bestimmt. Als Vernetzungsmittel werden blockierte Polyisocyanate oder Harze mit umesterungsfähigen Estergruppen eingesetzt. Das Vernetzungsmittel hat zweckmäßig eine mittlere Molmasse (Mn) von etwa 250 bis 5000, speziell 500 bis 3000. Die Komponenten (A) und (B) können kalt oder in der Wärme gemischt und dabei gegebenenfalls auch insbesondere bei erhöhten Temperaturen präkondensiert werden. Dabei reagieren die Komponenten (A) und B) in gewissem Umfang miteinander, ohne daß das Gemisch seine Hitzehärtbarkeit und die Eigenschaft durch Protonisieren mit Säuren wasserlöslich gemacht werden zu können, verliert.

Als Komponente B werden bevorzugt vollständig blockierte Polyisocyanate eingesetzt, die gegebenenfalls übliche Katalysatoren enthalten. Für Speizialzwecke kann es günstig sein, die blockierten Polyisocyanate mit geeigneten Formaldehyd-Kondensationsharzen oder umesterungsfähigen Polyestern zu verschneiden.

Die als Vernetzungsmittel eingesetzten Polyisocyanate und/oder isocyanatgruppenhaltigen Prepolymere sind die gleichen, wie sie schon früher beschrieben wurden. Sie unterscheiden sich jedoch dadurch, daß sie zweckmäßig im Durchschnitt mehr als zwei reaktive Isocyanatgruppen pro Molekül, die durch Schutzgruppen blockiert sind, für die Vernetzung zur Verfügung stellen.Beispielsweise können Gemische aus drei- und/oder höherwertigen Polyisocyanaten mit difunktionellen isocyanatgruppenhaltigen Prepolymeren verwendet werden.

Das Äquivalentverhälts von primären bzw. sekundären Aminogruppen und Hydroxylgruppen der Komponente A zu den blockierten Isocyanatgruppen der Komponente B liegt im Bereich von 1:0,1 bis 1,5,vorzugsweise bei 1:0,7 bis 1,2, und beträgt besonders bevorzugt 1:1.

Polyisocyanate sind verkappt oder blockiert, wenn sie mit den aktiven Wasserstoffatomen des Basisharzes (Hydroxylgruppen oder Aminwasserstoffgruppen) bei normalen Lagertemperaturen nicht reagieren. Wird der beschichtete Gegenstand jedoch auf eine Temperatur erwärmt, die ausreichend ist, um die Verkappung des Isocyanats aufzuheben, so tritt die Vernetzung bzw. Härtung des Überzugs zu einem schützenden, unlöslichen Film auf. Als verkappte Isocyanate können beliebige Isocyanate verwendet werden, bei denen die Isocyanatgruppen mit einer Verbindung umgesetzt worden, ist, die gegenüber aktiven Wasserstoff bei erhöhter Temperatur, in der Regel zwischen etwa 90 und 200°C reagiert. Blockierte Polyisocyanate werden z.B. dadurch hergestellt, daß man ein multifunktionelles Isocyanat mindestens mit einer stöchiometrischen Menge an einer monofunktionellen aktiven Wasserstoff (Zerewitinoff-Reaktion) enthaltenden Verbindung zweckmäßig bei Temperaturen von 50 bis 80°C umsetzt, wobei gegebenenfalls übliche Katalysatoren, wie basische Katalysatoren, wie tertiäre Amine oder geringe Mengen an Zinnsalzen, wie Dibutylzinndilaurat, zugegeben werden können. Die Isocyanatgruppe wird auf diese Weise bei Raumtemperatur gegen

Reaktionen mit Wasser oder Alkoholen geschützt. Sie spaltet sich bei Einbrenntemperaturen von weniger als 210°C, vorzugsweise weniger als 190°C, besonders unter 180°C, andererseits über 110°C, vorzugsweise über 140°C, besonders bevorzugt über 150°C, wieder ab, damit die freiwerdende Isocyanatgruppe mit dem Basisharz reagieren kann.

Als Polyisocyanate sind besonders gut die sogenannten "Lackpolyisocyanate" geeignet, die aus bekannten Diisocyanaten hergestellt werden. So entsteht aus Hexandiisocyanat und Wasser das Tris-(6-isocyanatohexyl)-biuret. Durch Trimerisation von Hexandiisocyanat erhält man Tris-(6-isocyanatohexyl)-isocyanurat, gegebenenfalls im Gemisch mit seinen höheren Homologen, sowie weiteren aus Isophorondiisocyanat, Diisocyanatotoluol oder Gemischen aus Diisocyanatotoluol und Hexamethylendiisocyanat aufgebauten Isocyanuratgruppen aufweisenden Polyisocyanaten. Sehr gut einsetzbare Polyisocyanate sind auch die Urethangruppen aufweisenden Polyisocyanate, die beispielsweise durch Umsetzung von überschüssigen Mengen an 2.4-Diisocyanatotoluol mit einfachen, mehrwertigen Alkoholen der Molmasse 63 bis 300, insbesondere Trimethylolpropan und gegebenenfalls destillative Entfernung des nicht umgesetzten Diisocyanatüberschusses erhalten werden können. So werden beispielsweise blockierte Triisocyanate oder blockierte höhermolekulare Reaktionsprodukte von Triisocyanaten mit Dialkoholen besonders bevorzugt. Bei dieser Umsetzung werden zweckmäßig ungefähr folgende Molverhältnisse eingehalten
Triisocyanat: Diol: Schutzgruppe wie 3y : (y-1) : (y+2), wobei y = 1 bis 6, bevorzugt 2 bis 3 ist. Mittel, die die Isocyanate blockieren, enthalten nur eine einzige Amin-, Amid-, Imid-, Lactam-, Thio-oder Hydroxylgruppe. Im allgemeinen werden flüchtige, aktiven Wasserstoff enthaltende Verbindungen mit niedrigen Molmassen, vorzugsweise von nicht mehr als 300, mehr bevorzugt von nicht mehr als 200, verwendet. So haben sich beispielsweise bewährt, aliphatische oder cycloaliphatische Alkohole, wie n-Butanol, 2-Ethylhexanol, Cyclohexanol, Phenole, tertiär-Butylphenole, Dialkylaminoalkohole wie Dimethylaminoethanol, Oxime wie Methylethylketoxim, Lactame wie ε-Caprolactam oder Pyrrolidon-2, Imide wie Phthalimid oder N-Hydroxy-maleinimid, Hydroxyalkylester, Malonsäure-oder Acetessigsäureester. Es werden aber auch β-Hydroxyglykole oder -glykolether und Glykolamide empfohlen. Oxime und Lactone sind als Verkappungsmittel von besonderem Interesse, weil die damit verkappten Polyisocyanate bei relativ niedrigen Temperaturen rea gieren. Zur Blockierung können auch mehr als eine Art von Schutzgruppe, bevorzugt solche mit unterschiedlicher Reaktivität, verwendet werden.

Das blockierte Polyisocyanant (Komponente B) wird im allgemeinen durch das neutralisierte Aminoepoxidharz stabil in der wäßrigen Dispersion einemulgiert gehalten. Bei relativ hohen Mengen ist es jedoch nützlich, in das blockierte Polyisocyanat basische Stickstoffatome einzubauen. Das geschieht beispielsweise durch Reaktion der Isocyanate mit tertiären Aminogruppen enthaltenden Polyalkoholen wie N-Methyldiethanolamin, Triethanolamin oder tertiäre Aminogruppen enthaltenden Polyaminen wie 3-(Methyl)-3-(2-aminoethyl)-aminopropylamin. Während hierbei eine Molekülvergrößerung auftritt, kann die Blockierung der Isocyanatgruppe auch mit monofunktionellen Verbindungen mit tertiären Amino-Gruppen erfolgen. Hierzu dienen beispielsweise N-Dialkyl-aminoalkohole wie Dimethyl-aminoethanol oder N.N-Dialkyl-alkylendiamine wie Dimethylaminpropylamin oder N.N-Diethyl-N′-methyl-1.3-ethandiamin.

Die Vernetzung der Aminoepoxidharze mit blockierten Polyisocyanaten kann gegebenenfalls durch Zusatz von 0,01 bis 2 Gew.-%, speziell 0,5 bis 1 Gew.-%, bezogen auf Festharz an Katalysatoren, wie stark basischer tertiärer Amine und/oder aktiver Metallverbindungen beschleunigt werden. Eine besondere, manchmal synergistische Wirkung wird erreicht durch die Kombination von basischem Medium der abgeschiedenen Harze und den Metallsalzen von Wismut, Blei, Kobalt, Eisen, Antimon und/oder Zinn-II und Zinn-IV-Verbindungen. Besonders bevorzugt werden Katalysatoren wie Eisen-III-acetylacetonat, Zinkacetylacetonat, Dibutylzinn-dilaurat, Di-n-butyl-zinnoxid, Dibutyl-zinn-dioctyl-maleat, Zinn-octoat, Zinn-oleat, Tetrabutyltitanat und/oder Cobalt-2-ethylhexanoat. Bevorzugt sind Katalysatoren, die im EC-Bad nur bedingt löslich sind und sich in fein verteilter Form mit dem Lack elektrophoretisch abscheiden und im Film ohne Verlaufsstörungen beim Einbrennen gleichmäßig verteilen lassen. Sind ungesättigte Doppelbindungen im Harz enthalten, so können auch die üblichen Metallsikkative gegebenenfalls in Emulsionsform zur Verbesserung der Härtungseigenschaften zugegeben werden.

Harze mit umesterungsfähigen Estergruppen enthalten endständige oder seitenständige, veresterte Carboxylgruppen, die im neutralen, wäßrigen Medium weitgehend stabil sind, jedoch im basischen Medium des abgeschiedenen Films bei Temperaturen über etwa 140°C mit einem oder mehreren hydroxy-und/oder aminogruppenhaltigen Kunstharz-Bindemittel (Komponente A) reagieren. Hierbei estern bzw. amidieren die umesterungsfähigen Estergruppen mit den Hydroxy-bzw. primären Aminogruppen des Kunstharz-Bindemittels (A) unter Abspalten der leichter flüchtigen "alkoholischen Schutzgruppen" um. Es sollen im wesentlichen alle endständigen oder seitenständigen Carboxylgruppen mit Alkohol verestert sein, die unter den Einbrennbedingungen flüchtig sind. Um ein Wandern des Polyesters zur Anode zu vermeiden, ist darauf zu achten, daß er eine Säurezahl unter 20, bevorzugt unter 10, besonders bevorzugt unter 3 hat.

Die Reaktivität der Ester wird durch geeigneten chemischen Aufbau gesteigert, z.B. durch Erhöhen der elektrophilen Aktivität der Carboxylgruppe oder durch einen negativen induktiven Effekt auf die Alkoholgruppe.

Zur Umesterung befähigt sind primäre, sekundäre und tertiäre Carboxylgruppen. Aufgrund ihrer höheren Reaktivität werden primäre Carboxylgruppen bevorzugt.

Die Umesterung wird unterstützt durch die Flüchtigkeit von niederen linearen oder verzweigten primären Monoalkoholen oder durch 1.2-Glykole, die gegebenenfalls durch Ether-oder Estergruppen substituiert sind. In der Literatur werden eine Reihe estergruppenhaltige Vernetzungsmittel beschrieben, die zur Umesterung mit OH-Gruppen und/oder Umamidierung mit $NH_2$-Gruppen eingesetzt werden.

So wird als Vernetzungsmittel ein carboxylgruppenhaltiger Polyester beschrieben, dessen Carboxylgruppen durch gegebenenfalls substituierte 1.2-Glykole unter Bildung von β-Hydroxyverbindungen blockiert sind:

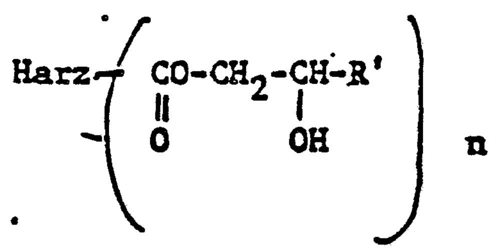

Die eingesetzten 1,2-Glykole sind zweckmäßig durch gesättigte oder ungesättigte Alkyl-, Ether-, Ester-oder Amidgruppen substituiert, d.h. R' steht für -H, -R, $-CH_2OH$, $-CH_2-O-R$, $-CH_2-O\underset{\underset{O}{\|}}{C}-R$, $-CH_2NH\underset{\underset{O}{\|}}{C}-R$,

wobei n mindestens 2, bevorzugt einen Wert von 3 bis 10 bedeutet. R ist eine lineare oder verzweigte Alkylgruppe mit 1 bis 15 C-Atomen. Solche Vernetzungsmittel sind in der EP-A-012 463 und DE-A-31 03 642 beschrieben, z.B. als Reaktionsprodukt von Trimellithsäureanhydrid mit Cardura E®, dem Glycidylester der Versaticsäure®.

Andere Vernetzungsmittel werden durch Umesterung von Dicarbonsäurealkylestern mit Polyalkoholen hergestellt. Als besonders reaktiv haben sich Harze folgender allgemeiner Formel erwiesen:

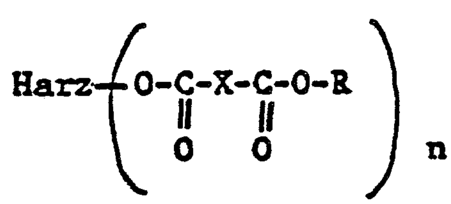

wobei n mindestens 2 ist, bevorzugt einen Wert von 3 bis 10, X eine $-CH_2-$, $-CH_2-CH_2-$oder $-CH=CH-$Gruppe und R einen geradkettigen oder verzweigten Alkylrest mit 1 bis 8, bevorzugt 1 oder 2 C-Atomen darstellt. Im einfachsten Fall ist dieses Vernetzungsmittel ein Reaktionsprodukt aus Trimethylolpropan und Malonsäuredimethylester, wie es in der EP-A-082 291 beschrieben ist.

Andere zur Umesterung befähigte Vernetzungsmittel werden durch Michael-Addition von Acetessigsäurealkylester oder Malonsäuredialkylester an Harze mit Doppelbindungen die über CO-Gruppen aktiviert werden, erhalten:

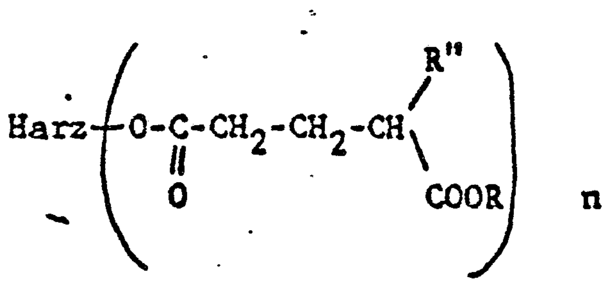

wobei

R" für -COOR, -CO-R oder -CN steht und n mindestens 2, bevorzugt ein Wert von 3 bis 10 ist. Diese Harze werden im einfachsten Fall aus Butandioldiacrylat und Acetessigester oder aus dem Toluylendiisocyanat-hydroxy-alkyl(meth)-acrylat-Addukt und Malonsäuredialkylester, wie in der DE-A-33 15 469 beschrieben, hergestellt. Die Michael-Addition kann stöchiometrisch durchgeführt werden oder aber auch mit überschüssigen Doppelbindungen.

Die Vernetzung der Komponenten (A) und (B) kann gegebenenfalls durch Zusatz von stark basischen tertiären Aminen und/oder aktiven Metallverbindungen beschleunigt werden.

Eine besondere, manchmal synergistische Wirkung wird erreicht durch die Kombination von basischem Medium des abgeschiedenen Amino-Basisharzes und den Metallkatalysatoren.

Zur Katalyse des Umesterungsverfahrens ist im allgemeinen ein höherer Katalysatorgehalt notwendig als für die Umsetzung der Komponenete (A) mit den blockierten Polyisocyanaten. Insgesamt liegt der Gehalt an solchen Katalysatoren im Bereich von etwa 0,5 bis 5 Gew.-% Metall bezogen auf das Gesamtgewicht der Komponenten (A) und (B). Das genaue Mengenverhältnis kann der Fachmann unter Berücksichtigung des Stands der Technik leicht ermitteln. Als Katalysatoren werden zweickmäßig Metalloxide, Metallsalze oder Metallkomplexe von ein-oder mehrwertigen Metallen eingesetzt. Sie werden im allgemeinen nach Salzbildung mit z.B. 2-Ethylhexansäure oder Naphthensäure in aliphatischen und aromatischen Kohlenwasserstoffen gelöst. Diese Lösungen werden in das Elektrophoresebad einemulgiert. Eine andere Möglichkeit besteht in der Komplexbildung der Metalle mit Acetylacetonat, Dicyclopentadien, 8-Oxyhydrochinolin, 4-Methylcatechin und/oder 2,5-Di-mercapto-1,3,4-thiodiazol. Beispiele für geeignete Katalysatoren sind Antimontrioxid, Tri-n-butylzinnoxid, Dibutylzinn-dilaurat, Bleioctoat, Eisen-III-acetylacetonat oder das Reaktionsprodukt aus Zinkoxid und 8-Oxyhydrochinolin. Die Metallkatalysatoren können auch in fein verteilter Form als Pigmente wie Bleisilikat eindispergiert werden. Wasserverdünnbare Metallsalze sind ebenfalls als Umesterungskatalysatoren geeignet, wenn das Metall als Verbindung oder Komplex in fein verteilter Form mit dem Lack abgeschieden wird. Bevorzugt sind Katalysatoren, die im ET-Bad schlecht löslich sind und sich nach der elektrophoretischen Abscheidung im abgeschiedenen Film beim Einbrennen gleichmäßig verteilen.

Nach dem erfindungsgemäßen Verfahren lassen sich durch azeotropes Abdestillieren des nichtwasserlöslichen Lösemittels mit Wasser stabile, praktisch lösemittelfreie wässrige Bindemittel-Dispersionen herstellen. Einem solchen Bindemittel kann man aus Verlaufsgründen oder zur Beeinflussung der Schichtdicke definierte Mengen an Lösemitteln wieder zusetzen. Der Gehalt an organischen Lösemitteln sollte dabei möglichst niedrig gehalten werden, beispielsweise unter 5 %, bevorzugt unter 3 Gew.-% im Elektrophoresebad.

Als Lösemittel dienen Alkohole, Glykolether, Ketoalkohole, aber auch aliphatische und/oder aromatische Kohlenwasserstoffe verschiedener Kettenlänge. Bei der Auswahl muß berücksichtigt werden, daß das Vernetzungsmittel nicht wasserlöslich ist und Anteile von geeigneten Lösemitteln gegebenenfalls den Dispergiervorgang erleichtern und stabilisieren können. Mit steigendem Lösemittelgehalt verschlechtert sich der Umgriff, die abgeschiedene Schichtdicke erhöht sich und es können Überbeschichtungen auftreten. Wasserunlösliche Lösemittel wirken hierbei stärker als wasserlösliche. Zur Verlaufsverbesserung und zum Senken des Schichtwiderstandes kann auch anteilweise ein nicht wasserlösliches, hochsiedendes Lösemittel zugesetzt werden, wie Hexylenglykol, Phenoxyethanol, Ethylhexanol, Isodekanol oder 2.2.4-Trimethylpentandiol-1.3-monoisobutyrat.

Zum Ausbalanzieren der anwendungstechnischen Eigenschaften ist es oft zweckmäßig, daß der Dispersion der Komponenten (A) und (B) noch zusätzlich bis zu 30 Gew.-% eines anderen Bindemittelsystems zugesetzt werden. Hierzu dienen beispielsweise ungesättigte Aminoepoxidharze aus der DE 27 07 405 oder Aminoacrylatharze aus der DE 36 28 121.

Zur Herstellung von Überzugsmitteln bzw. Lacken aus den erfindungsgemäß bereiteten Bindemitteldispersionen ist es möglich, Pigmente, Füllstoff, Korrosionsinhibitoren und/oder übliche Lackhilfsmittel in üblicher Weise an geeigneter Stelle des Herstellungsverfahrens einzudispergieren.

Der Feststoffgehalt des Überzugsmittels gemäß der Erfindung beträgt nach Verdünnen mit Wasser zweckmäßig 5 bis 60 Gew.-%. Beim Einstellen des Lackes auf einen höheren Festkörper von 25 bis 50 Gew.-%, bevorzugt 30 bis 45 Gew.-%, werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.-%, vorzugsweise 10 bis 20 Gew.-%, so ist der Lack für die elektrophoretische Abscheidung geeignet. Das Bad wird ständig gerührt, um an der Kathodenoberfläche eine gleichmäßige Temperatur aufrechtzuerhalten und das Absetzen der unlöslichen Bestandteile der Dispersion, z.B. der Pigmente, zu verhindern. Der pH-Wert des Lackes liegt im allgemeinen zwischen 4,0 und 8,0, vorzugsweise zwischen 6,0 und 7.5. Liegt der pH-Wert zu niedrig, so ist mit einem Angriff der

Säure auf das Eisen von Becken, Rohrleitungen und Pumpen zu rechnen. Die elektrophoretische Abscheidung erfolgt zweckmäßig frühestens 24 Stunden nach Herstellen des Bades. Während dieser Zeit wird zweckmäßig kontinuierlich gerührt, um eine gleichmäßige Verteilung zu erhalten. Als Anode werden elektrisch leitfähige, nicht korrodierende Elektroden, z.B. aus nichtrostendem Stahl oder Graphit verwendet. Der an der Kathode zu beschichtende Gegenstand und die Anode werden, wie für die elektrophoretische Abscheidung bekannt, in ein wäßriges Bad eingetaucht. Es können alle metallisch leitenden Werkstücke beschichtet werden, wie Kupfer, Aluminium, Zinn, Zink, Eisen und Legierungen dieser Metalle. Während des Abscheidens wird das Bad bei Temperaturen von zweckmäßig etwa 15 bis 35°C gehalten. Festkörper, Abscheidungstemperatur und -zeit sowie Spannung werden so gewählt, daß die gewünschte Schichtstärke nach Abspülen mit Ultrafiltrat und/oder Wasser und Einbrennen bei Temperaturen von 130 bis 230°C erhalten wird. So steigt z.B. die Schichtstärke mit zunehmender Beschichtungszeit und Abscheidespannung. Beim Anlegen eines elektrischen Stromes mit einer Spannung von zweckmäßig 50 bis 500 Volt zwischen metallisch leitendem Werkstück und einer Gegenelektrode wird das wasserverdünnbare Basisharz an der Kathode koaguliert. Es transportiert hierbei das wasserunlösliche Vernetzungsmittel, Pigmente, Katalysatoren usw. mit. Hierbei kann sich das Verhältnis von Pigment zum Kunstharz-Bindemittel im abgeschiedenen Film zugunsten des Pigmentes verschieben. Gleichzeitig werden Wasser und die zur Neutralisation verwendete Säure im Bad angereichert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z.B. Elektrodialyseverfahren oder Ultrafiltration erfolgen.

Erfindungsgemäß ist es auch möglich, ein konzentriertes, mit Wasser zu verdünnendes Bindemittel mit z.B. einem Festkörper von etwa 85 bis 60 Gew.-% bereitzustellen, dieses kann in üblicher Weise mit Kugelmühle, Dreiwalze oder Perlmühle pigmentiert werden. Hierzu können übliche Pigmente, wie sie z.B. in der DIN 55 944 beschrieben werden, Füllstoffe, Korrosionsschutz-Inhibitoren und Lackhilfsmitteln, wie Antikratermittel, Verlaufmittel oder Antischaummittel, verwendet werden. Naturgemäß wählt man solche aus, die mit Wasser im sauren bis neutralen Medium keine störenden Reaktionen eingehen, keine wasserlöslichen Fremdionen einschleppen und beim Altern nicht in solcher Form ausfallen, daß sie nicht wieder aufgerührt werden können. Die Lacke sind besonders für die Elektrotauchlackierung von Metallen geeignet und geben wäßrige Lösemittelarme Dispersionen, die genau definierbare Lösemittelzusätze enthalten können.

Amino-Epoxidharz

1200 g Xylol und 2125 g Polyglycidylether auf Basis Bisphenol A mit einem Epoxid-Äquivalentgewicht von 482 werden auf 40 bis 50°C unter Inertgas erwärmt und nacheinander erst mit 149.2 g Diethanolamin und danach mit einem Gemisch aus 72.4 g Dimethylaminopropylamin und 452.8 g Addukt, das aus 1 Mol Hexandiamin und 2 Mol Cardura E, einem Glycidylester der Versaticsäure, hergestellt wurde, umgesetzt. Innerhalb von 2 Stunden wird bis auf 110 bis 120°C erwärmt und bei dieser Temperatur 3 Stunden gehalten. Der Epoxidgehalt ist dann Null.
Aminzahl: 86 (mg KOH pro g Festharz)
Festkörpergehalt: 68.0 Gew.-% (nach 30 Min. Erwärmen auf 180°C)
Das Harz wird warm weiterverarbeitet.

Umesterungsfähiger Vernetzer

1248 g eines Glycidylesters der Versaticsäure (Cardura E) werden auf 100°C unter Inertgas erwärmt und dann unter gutem Rühren in mehreren Portionen 460.8 g Trimellithsäureanhydrid zugegeben. Unter Ausnutzen der exothermen Reaktion wird bis auf 195°C geheizt. Wenn das Harz klar ist, wird auf 145°C abgekühlt und 1.8 ml Benzyldimethylamin als Katalysator zugegeben. Nach Erreichen einer Säurezahl von 1 (mg KOH pro g Festharz) wird auf 100°C abgekühlt und mit 475 g Xylol verdünnt.
Festkörpergehalt: 76.7 Gew.-% (30 Min. 180°C)

Blockiertes Polyisocyanat

1440 g eines Umsetzungsproduktes von 1 Mol Trimethylolpropan mit 3 Mol Toluylendiisocyanat (Desmodur L), das 75 % in Ethylacetat gelöst ist, wird unter Ausschluß von Feuchtigkeit und Überleiten von trockenem Inertgas unter gutem Rühren auf 80°C erwärmt. Es werden 600 g Ethylhexanol innerhalb einer Stunde zugegeben, wobei die Temperatur nicht wesentlich weiter ansteigen soll. Man hält 2 Stunden bei 80°C, wobei die NCO-Zahl auf Null abfällt. Anschließend wird mit 408 g Xylol verdünnt und bei 47 - 50°C das Ethylacetat vollständig abdestilliert.
Festkörpergehalt: 78.6 Gew.-%
Visk. 211 mPas (nach Verdünnen auf 50 Gew.-% mit Xylol) bei 25°C)

Beispiel 1

1765 g Amino-Epoxidharz werden mit 522 g umesterungsfähigen Vernetzer gemischt und danach unter Zusatz von 90 g Eisessig und 2285 g vollentsalztem Wasser eine bei 50°C dickflüssige, homogene Lösung hergestellt. Bei etwa 40 bis 50°C wird über einen Abscheider, der das abgetrennte Wasser wieder in das Reaktionsgefäß zurücklaufen läßt, unter Vakuum das Xylol ausgekreist.und mit 670 g Wasser verdünnt.
Festkörper: 37.7 Gew.-% (30 Min. 180°C)
MEQ-Wert = 35 (Milliäquivalente Säure pro 100 g Festharz)
Es entsteht eine dünnflüssige, lagerstabile Dispersion, die noch etwa 0.5 % Rest-Xylol enthält.

Beispiel 2

1765 g Amino-Epoxidharz werden mit 509 g blockiertem Polyisocyanat gemischt und danach unter Zusatz von 54 g Milchsäure (80 %ig) und 2297 g vollentsalztem Wasser eine bei 50°C dickflüssige, homogene Lösung hergestellt. Bei etwa 50°C wird über einen Abscheider, der das abgetrennte Wasser wieder in das Reaktionsgefäß zurücklaufen läßt, unter Vakuum das Xylol ausgekreist.und mit 670 g Wasser weiter verdünnt.
Festkörpergehalt: 35.2 Gew.-% (30 Min. 180°C)
MEQ-Wert: = 25.7

Beispiel 3

1765 g Amino-Epoxidharz werden mit 483 g blockiertem Polyisocyanat, und 26 g umesterungsfähigem Vernetzer gemischt und danach unter Zusatz von 44 g Milchsäure (80 %ig) und 2294 g vollentsalztem Wasser eine bei 50°C dickflüssige homogene Lösung hergestellt. Bei ca. 50°C wird über einen Abscheider, der das abgetrennte Wasser wieder in das Reaktionsgefäßt zurücklaufen läßt, unter Vakuum das Xylol ausgekreist und mit 660 g Wasser weiter verdünnt.
Festkörpergehalt: 36 Gew.-% (30 Min. 180°C)
MEQ-Wert = 21

Die in den vorstehenden Beispielen 2 und 3 erhaltenen wäßrigen Emulsionen sind dünnflüssig und können über mehrere Monate unverändert gelagert werden. Es lassen sich daraus in üblicher Arbeitsweise unter Verwendung üblicher Zusätze gut abscheidbare Lacke herstellen.

**Ansprüche**

1. Verfahren zur Herstellung von an der Kathode abscheidbaren wäßrigen Elektrotauchlacküberzugsmitteln mit einem niedrigen Lösemittelgehalt und einem Gehalt an Pigmenten, Füllstoffen und üblichen Hilfsstoffen, durch Bereiten eines basischen Bindemittelsystems in einem Lösemittel, eines Vernetzersystems in einem Lösemittel, Vermischen der beiden Systeme, Neutralisieren und Verdünnen mit Wasser, **dadurch gekennzeichnet**, daß man

a) das basische Bindemittelsystem in einem mit Wasser nicht bzw. nur teilweise mischbaren organischen Lösemittel herstellt,

b) das Vernetzersystem in einem mit Wasser nicht bzw. nur teilweise mischbaren Lösemittel herstellt,

c) die in a) und b) erhaltenen Systeme vermischt und gegebenenfalls präkondensiert,

d) die in c) erhaltene Lösung mit Säuren ganz oder teilweise neutralisiert und das Wasser unter Bildung einer Dispersion bzw. Emulsion zusetzt,

e) aus dieser Dispersion bzw. Emulsion das mit Wasser nicht bzw. nur teilweise mischbare organische Lösemittel azeotrop abdestilliert, und

f) gegebenenfalls für die Steuerung der Eigenschaft notwendige wasserlösliche und/oder wasserunlösliche Lösemittel in definierten Mengen sowie gegebenenfalls die Pigmente, Füllstoffe und/oder üblichen Lackhilfsmittel zusetzt.

2. Verfahren nach Anspruch 1, dadurch gekennzeichnet, daß man für die Herstellung a) und b) jeweils das gleiche mit Wasser nicht bzw. nur teilweise mischbare organische Lösemittel verwendet.

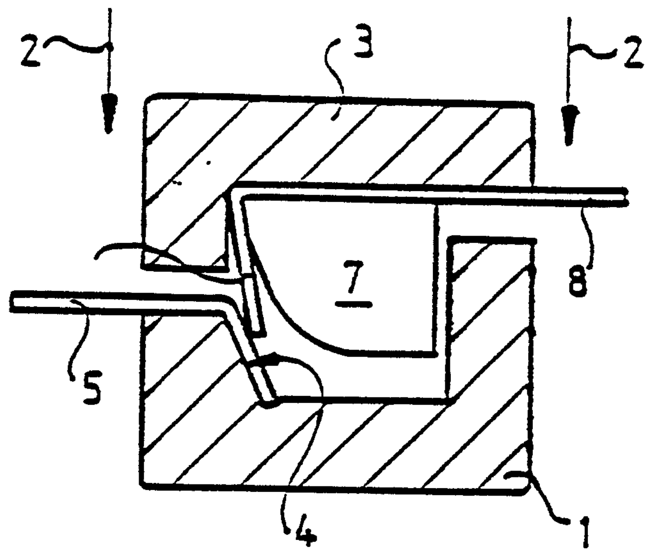


Fig. 1

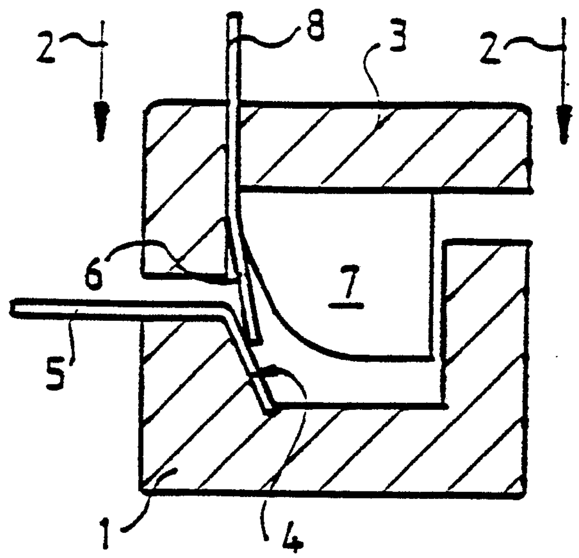


Fig.2

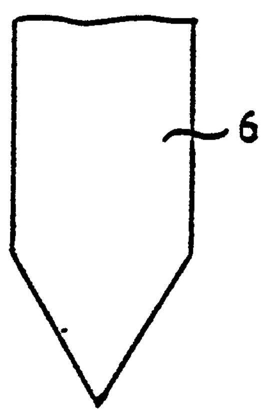


Fig. 5

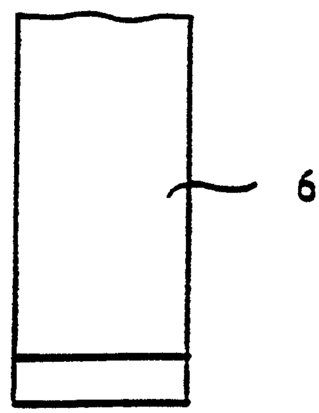


Fig.6

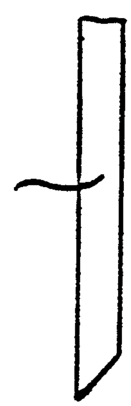

Fig.7

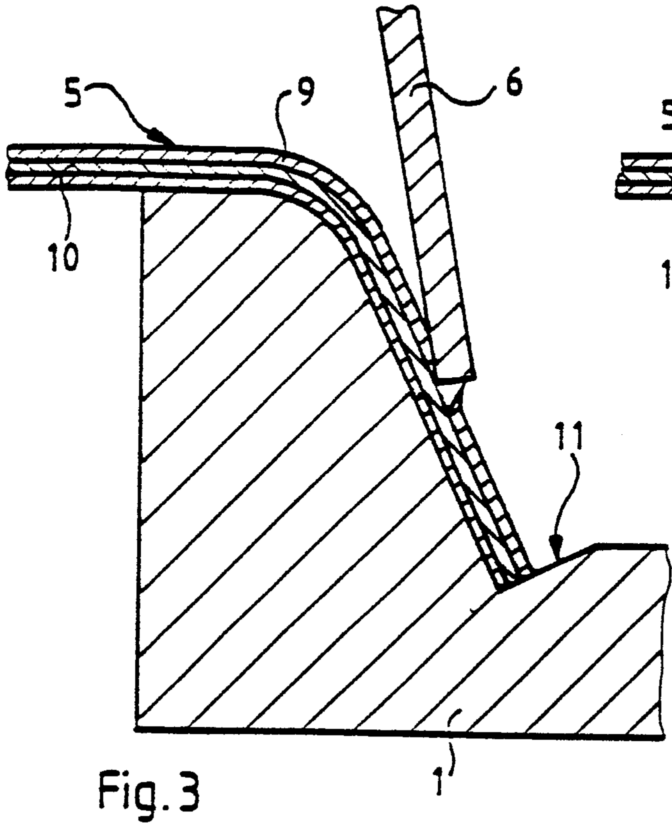


Fig. 3

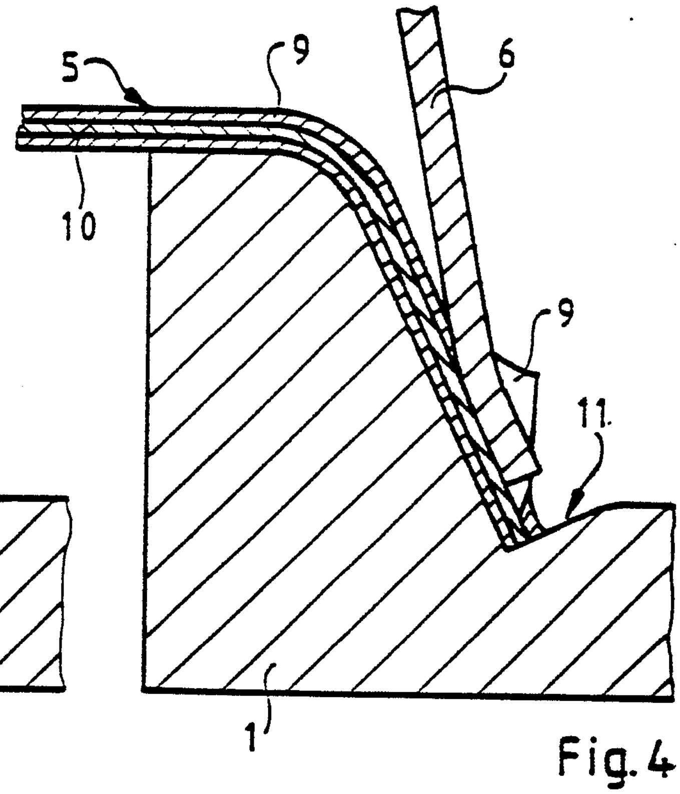


Fig. 4

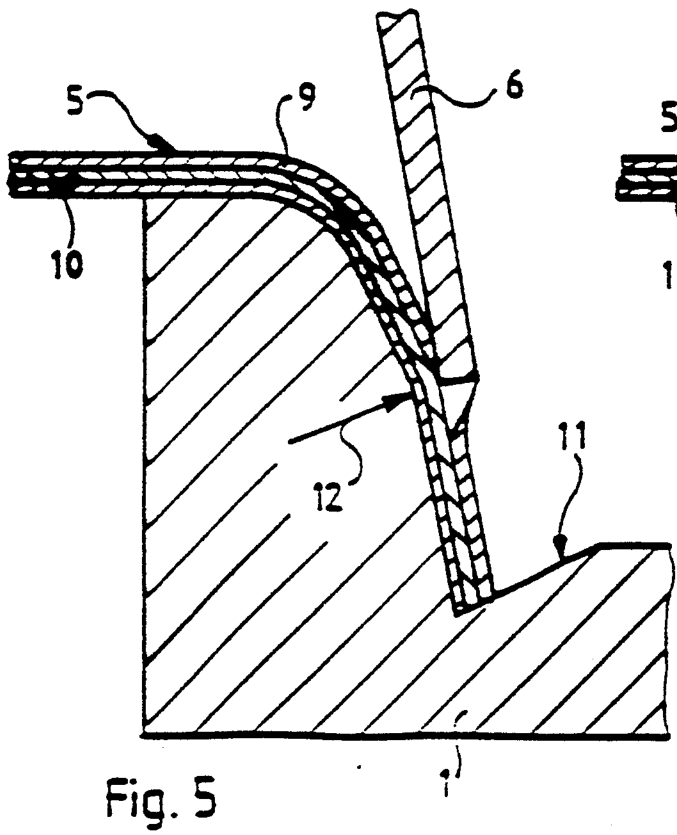


Fig. 5

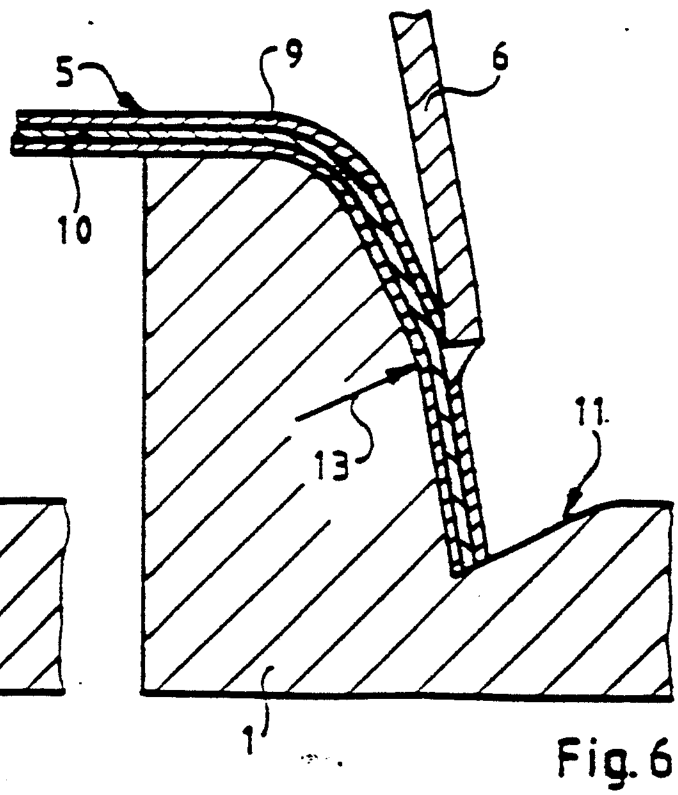


Fig. 6